# EUROPEAN PATENT APPLICATION

(11) **EP 3 718 828 A1**
(43) Date of publication of application: **07.10.2020**
(21) Application number: 19167413.4
(22) Date of filing: 04.04.2019
(51) Int. Cl.: B60R 11/04, B60R 1/00

(54) **SYSTEM FOR PROVIDING A SIDE MIRROR FUNCTION**

(71) Applicant: Visteon Global Technologies, Inc., Van Buren Township, MI 48111-5711 (US)
(72) Inventor: VITORIANO, Pedro Miguel Agulhas, 2900-712 Setubal (PT)
(74) Representative: MERH-IP Matias Erny Reichl Hoffmann Patentanwälte PartG mbB

(57) **Abstract**

A system for a vehicle (10) is described. The system comprises a control unit (11) and a camera unit (20), which is configured to capture image data within an adaptable field of view (23). The control unit (11) is configured to determine whether the vehicle (10) is operated in a first driving mode or in a second driving mode. Furthermore, the control unit (11) is configured to set an orientation (26) of the field of view (23) of the camera unit (20) to capture image data for providing a side mirror function to a driver of the vehicle (10), when it is determined that the vehicle (10) is operated in the first driving mode. In addition, the control unit (11) is configured to adapt the orientation (26) of the field of view (23) of the camera unit (20) to capture image data for assisting an advanced driver-assistance functionality of the vehicle (10), when it is determined that the vehicle (10) is operated in the second driving mode.

## Description

### TECHNICAL FIELD

One or more examples described herein relate to a system, a method or a control unit for providing a side mirror function within a vehicle. Furthermore, one or more examples described herein relate to a vehicle comprising a camera unit configured to provide a side mirror function.

### BACKGROUND

A vehicle, notably a road vehicle such as a car, a bus, a truck or a motorcycle, comprises side mirrors which enable a driver of the vehicle to see the environment of the vehicle behind the rear of the vehicle. In a conventional set-up, the side mirrors of the vehicle extend laterally outward from opposite sides of the vehicle. The maximum width of the vehicle may be measured from a first side mirror, such as a left side mirror, to a second side mirror, such as a right side mirror. Notably, the side mirrors impact aerodynamic properties of the vehicle. For example, while the vehicle is underway, the presence of the side mirrors can increase drag on the vehicle. This can reduce the operational range of the vehicle.

A vehicle may comprise an advanced driver assistance system (ADAS), which is configured to at least partially take over the driving task of the driver of the vehicle. For example, the vehicle, when the ADAS is activated, may operate in an autonomous driving mode or a semi-autonomous driving mode. When the ADAS is deactivated, the vehicle may operate in a manual driving mode. In the manual driving mode, all of the driving tasks may be allocated to the driver of the vehicle. In the vehicle, the ADAS may use environmental sensors of the vehicle, such as cameras, radar sensors, lidar sensors, and/or ultrasonic sensors to sense an environment around the vehicle.

### BRIEF SUMMARY OF THE INVENTION

One or more embodiments provide a side mirror function within a vehicle that may be used advantageously in a manual driving mode and an autonomous driving mode of the vehicle.

According to an aspect, a control unit for a vehicle is described, wherein the vehicle comprises a camera unit at at least one side of the vehicle. The control unit may be coupled to the camera unit. The camera unit is configured to capture image data within a field of view, wherein an orientation of the field of view of the camera unit is adaptable. The control unit is configured to determine whether the vehicle is operated in a firstdriving mode or in a second driving mode. Furthermore, the control unit is configured to set the orientation of the field of view of the camera unit to capture image data for providing a side mirror function to a driver of the vehicle, if it is determined that the vehicle is operated in the first driving mode. In addition, the control unit is configured to adapt the orientation of the field of view of the camera unit to capture image data for assisting an (advanced) driver-assistance functionality of the vehicle, if it is determined that the vehicle is operated in the second driving mode.

According to an aspect a system comprising the control unit and a camera unit which is coupled to the control unit is described.

According to an aspect, a vehicle, notably a (one-track or two track) road vehicle, is described, such as a car, a bus, a truck or a motorcycle. The vehicle comprises a camera unit. The camera unit is located at at least one side of the vehicle. The side may extend along a roll axis of the vehicle. Furthermore, the vehicle comprises a control unit. The control unit may be coupled to the camera unit. Additionally, the vehicle may include one or more driving modes. For example, the vehicle may include a first driving mode and a second driving mode. The vehicle may operate in the first driving mode. The vehicle may operate in the second driving mode. When in the first driving mode, the vehicle may change to the second driving mode. Similarly, when in the second driving mode, the vehicle may change to the first driving mode.

According to a further aspect, a method for operating a camera unit of a vehicle is described. The camera unit is located at at least one side of the vehicle, and is configured to capture image data within a field of view, wherein an orientation of the field of view of the camera unit is adaptable. The method comprises determining whether the vehicle is operated in a first driving mode or in a second driving mode. Furthermore, the method comprises setting the orientation of the field of view of the camera unit to capture image data for providing a side mirror function to a driver of the vehicle, if it is determined that the vehicle is operated in the first driving mode. In addition, the method comprises adapting the orientation of the field of view of the camera unit to capture image data for assisting a driver-assistance functionality of the vehicle, if it is determined that the vehicle is operated in the second driving mode.

### BRIEF DESCRIPTION OF THE DRAWINGS

Fig. 1 shows example components of a vehicle.
Figs. 2a to 2d illustrate example orientations of the field of view of a camera unit of a vehicle.
Fig. 3 shows a flow chart of an example method for controlling the camera unit of a vehicle.

### DETAILED DESCRIPTION OF THE INVENTION

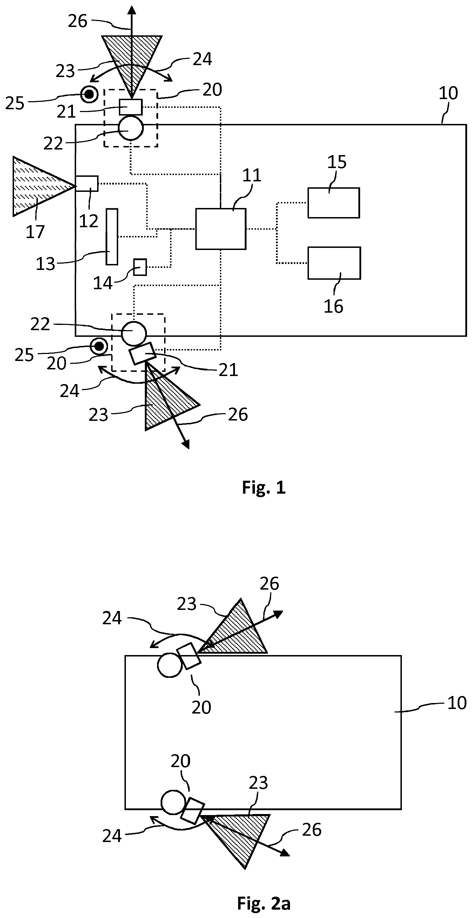

As outlined above, the present document relates to providing means within a vehicle, which may be used in a flexible manner to provide a side mirror function when the vehicle is operated in a manual driving mode and which may be used to improve operation of the vehicle in an autonomous driving mode. In this context, Fig. 1 shows a block diagram with example components of a vehicle 10, notably of a two-track vehicle. The vehicle 10 comprises a first camera unit 20 on a first side (e.g. the left side) of the vehicle 10 and a second camera unit 20 on a second side (e.g. the right side) of the vehicle 10.

A camera unit 20 is configured to capture image data with regards to the environment of the respective side of the vehicle 10. The image data comprises a sequence of image frames, e.g. at a frame rate of 20 images/second or more, or of 50 images/second or more. In particular, a camera unit 20 comprises a camera 21 for capturing the image data. The camera 21 exhibits a field of view 23 for capturing the image data. The field of view 23 may be adaptable. The field of view 23 may span a defined range of azimuth angles and/or a defined range of inclination or elevation angles. Examples angular ranges of azimuth and/or inclination angles lie between 30° and 90°.

A camera unit 20 comprises a motion module 22 which is configured to change the field of view 23 of the camera 21 of the camera unit 20. The motion module 22 may be operated using one or more electrical motors. The motion module 22 may be configured to change the orientation 26 of the field of view 23 along a horizontal direction and/or along a vertical direction with respect to the vehicle 10. In particular, the motion module 22 may be configured to rotate the field of view 23 around a vertical axis (notably the z-axis or the yaw axis of the vehicle 10), in order to change the azimuth angle 24 of the orientation 26 of the field of view 23. Alternatively, or in addition, the motion module 22 may be configured to rotate the field of view 23 around a horizontal axis (notably the x-axis or the roll axis of the vehicle 10), in order to change the inclination or elevation angle 25 of the orientation 26 of the field of view 23 of the camera 21.

The field of view 23 of a camera unit 20 may be set such that the field of view 23 of the camera unit 20 corresponds to the typical field of view of a side mirror of a vehicle 10. Such a scenario is illustrated in Fig. 2a, where the first and the second camera units 20 of the vehicle 10 are oriented towards the rear of the vehicle 10.

The vehicle 10 comprises a display 13, such as a liquid crystal display (LCD) or a light-emitting diode (LED) display. The display 13 may be positioned within the head unit of the vehicle 10. In particular, the display 13 may be positioned such that the display 13 may be viewed by the driver of the vehicle 10 while driving the vehicle 10, without the need to turn the head.

Furthermore, the vehicle 10 comprises a control unit 11, notably an electronic control unit, ECU, configured to control the display 13 to render the image data captured by one or more camera units 20 of the vehicle 10. In particular, the image data of one or more camera units 20 may be rendered, when the one or more camera units 20 are oriented to capture image data corresponding to the typical field of view of corresponding one or more side mirrors. As a result of this, the rear environment of the vehicle 10 is displayed on the display 13, thereby providing a side mirror function within a vehicle 10 that does not comprise side mirrors.

Hence, the one or more side mirrors of a vehicle 10 may be replaced by one or more camera units 20, respectively, wherein the one or more camera units 20 are configured to provide image data of the rear environment of the vehicle 10. The image data may be rendered on a display 13 of the vehicle 10, thereby providing the driver of the vehicle 10 with video information regarding the rear environment of the vehicle. By doing this, the width of the vehicle 10 may be reduced and the aerodynamic properties of the vehicle 10 may be improved.

The vehicle 10 may comprise (additional) one or more environmental sensors 12 which are configured to capture sensor data with regards to the environment of the vehicle 10. Example environmental sensors 12 are a video camera, a radar sensor, a lidar sensors and/or an ultrasonic sensor. An environmental sensor 12 typically exhibits a defined sensing range 17 which defines the range and/or the area of the environment of the vehicle 10, for which sensor data may be captured.

The control unit 11 of the vehicle 10 may be configured to at least partially take over the forward and/or the sideways guidance of the vehicle 10. In particular, a forward actuator 15 for forward guidance (such as a propulsion engine or a breaking system of the vehicle 10) and/or a sideways actuator 16 for sideways guidance (such as a steering mechanism of the vehicle 10) may be controlled in dependence of the sensor data of the one or more environmental sensors 12, in order to at least partially or fully take over the forward and/or the sideways guidance of the vehicle 10 and/or in order to provide an advanced driving assistance system (ADAS) within the vehicle 10.

The degree of assistance provided to the driver of a vehicle 10 may vary. The different degrees of assistance are defined by the automation levels 0 up to 5 according to the Society of Automotive Engineers (SAE). Level 0 corresponds to a fully manual driving mode where the driver performs all driving tasks. Level 1 provides driver assistance, wherein the vehicle 10 is still controlled by the driver, but wherein one or more driving assist features are provided to the driver. Level 2 provides partial automation of the vehicle 10, e.g. with regards to acceleration and/or steering, however the driver remains engaged with the driving task and must monitor the environment of the vehicle 10 at all times. Level 3 provides a conditional automation of the vehicle 10, such that the vehicle 10 may drive autonomously during some driving situations. However, the driver must be ready to take control of the vehicle 10 at all times, given a certain notice or handover period (e.g. a few seconds). Level 4 provides high automation, where the vehicle 10 is capable of performing all driving functions under certain conditions. The driver may be provided with the option to take over the control of the vehicle 10 (e.g. upon request). Level 5 provides full automation, wherein the vehicle 10 is capable of performing all driving functions under all conditions. The driver may be provided with the option to take over the control of the vehicle 10 (e.g. upon request).

A vehicle 10 which is operated according to SAE levels 0 to 3 typically requires a side mirror function, in order to enable the driver of the vehicle 10 to perform a driving task and/or to supervise an automated function performed by the vehicle 10. On the other hand, a side mirror function is typically not required for a vehicle 10 which is operated according to SAE levels 4 or 5. In such cases, the one or more camera units 20 of the vehicle 10 may be used as auxiliary environmental sensors to enhance the ADAS functionalities of the vehicle 10.

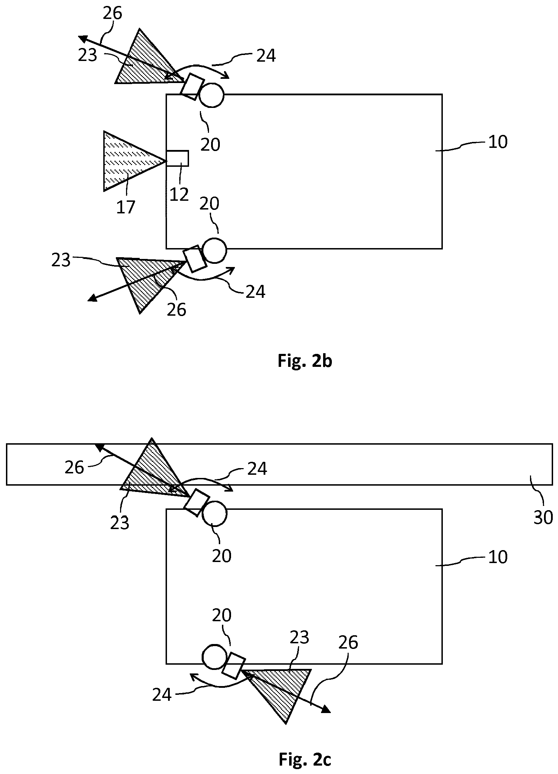

Figures 2b to 2d illustrate example driving situation, during which the one or more camera units 20 of a vehicle 10 may be used as additional environmental sensors. In particular, the field of view 23 of a camera unit 20 may be oriented towards a particular area of interest for providing or for assisting an ADAS functionality. As illustrated in Fig. 2b, the orientation 26 of the field of view 23 of the one or more camera units 20 may be adapted, in order to extend the sensing range 17 of an environmental sensor 12 of the vehicle 10. By way of example, the environmental sensor 12 may be used for sensing a particular area of the environment of the vehicle 10 at a relatively far distance, wherein the one or more camera units 20 are used for sensing the particular area of the environment of the vehicle 10 at a relatively close distance.

The control unit 11 of the vehicle 10 may be configured to detect an object 30 within the environment of the vehicle 10. The object 30 may be detected e.g. based on sensor data provided by one or more environmental sensors 12. By way of example, a sidewalk may be detected on the second (e.g. the right) side of the vehicle 10. The control unit 11 may control the second camera unit 20 to orient its field of view 23 towards the detected object 30, notably towards the detected sidewalk, in order to capture image data regarding the object 30. The image data may be used by the control unit 11 in the context of an ADAS functionality. By doing this, the reliability and the quality of the ADAS functionality may be improved. By way of example, the image data which is provided by the second camera unit 20 may be used to provide an improved supervision of the sideway.

The first and second camera units 20 of a vehicle 10 may be used independently from one another to capture image data for enhancing one or more ADAS functionalities of the vehicle 10. By way of example, the first camera unit 20 may be used to capture image data regarding the environment on the side or the rear of the vehicle 10, and the second camera unit 20 may be used to capture image data regarding a particular object 30 (as illustrated in Fig. 2c).

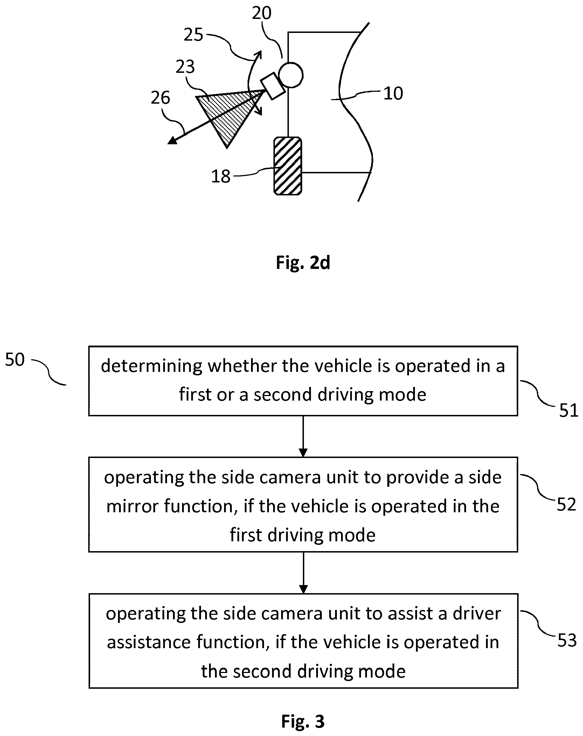

As outlined above, a camera unit 20 may be configured to change the azimuth angle 24 and/or the elevation angle 25 of the orientation 26 of its field of view 23. Fig. 2d illustrates one side of a vehicle 10 (including a wheel 18 of the vehicle 10). It can be seen that the orientation 26 of the field of view 23 may be rotated around the roll axis of the vehicle, in order to change the elevation angle 25 of the orientation 26 of the field of view 23 of the camera unit 20. This may be useful during a parking maneuver, e.g. for inspecting the ground around the vehicle 10 and/or for verifying whether a wheel 18 of the vehicle 10 touches a sidewalk.

Hence, a camera unit 20 for a vehicle 10 is described, which is configured to provide a side mirror function. Furthermore, the camera unit 20 is configured to redirect its field of view 23 depending on the interest and/or need of a ADAS system of the vehicle 10.

In particular, a control unit 11 for a vehicle 10 is described. The vehicle 10 comprises at least one camera unit 20 at at least one side of the vehicle 10. The side of the vehicle 10 may be a side spanning from the front of the vehicle 10 to the rear of the vehicle 10. In other words, the side of the vehicle 10, at which the camera unit 20 is located, may span along the x-axis or roll axis of the vehicle 10.

The camera unit 20 is configured to capture image data within a field of view 23, wherein the orientation 26 of the field of view 23 of the camera unit 20 is adaptable. By way of example, the field of view 23 of the camera unit 20 may be limited to an angular range for the azimuth angle 24 (around the z-axis or the yaw axis of the vehicle 10) and/or for the elevation angle 25 (around the x-axis or the roll axis of the vehicle 10). The angular range may lie between 30° and 90°. On the other hand, the orientation 26 of the field of view 23 may be adaptable, such that image data for an angular range of 90° or more, 140° or more, or 160° or more for the azimuth angle 24 and/or for the elevation angle 25 can be captured using the camera unit 20. Hence, by changing the orientation 26 of the field of view 23, the overall achievable field of view may be increased.

The orientation 26 of the field of view 23 may correspond to the orientation of the center of the field of view 23. By way of example, the field of view 23 may have the shape of a cone, wherein the cone may exhibit a base with e.g. a circular, an elliptical or a rectangular shape. The apex of the cone may correspond to the position of the camera unit 20, notably of the camera 21 of the camera unit 20. The orientation 26 of the field of view 23 may correspond to or may be the axis of the cone. The aperture of the cone may be limited to the above mentioned angular ranges for the field of view 23.

The camera unit 20 may comprise a camera 21 which is configured to capture the image data. Furthermore, the camera unit 20 may comprise a motion unit 22 which is configured to change the orientation of the camera 21 for changing the orientation 26 of the field of view 23 of the camera unit 20. The motion unit 22 may comprise one or more electrical motors for moving the camera 21. Hence, the motion unit 22 of the camera unit 20 may be controlled for setting and/or for adapting the orientation 26 of the field of view 23 of the camera unit 20.

The control unit 11 may be configured to determine whether the vehicle 10 is operated in a first driving mode (e.g. a manual driving mode) or in a second driving mode (e.g. an autonomous driving mode). By way of example, the vehicle 10 may comprise a user interface 14 (e.g. one or more control buttons) enabling the driver to select the first driving mode or the second driving mode. The control unit 11 may be configured to determine the driving mode based on a setting of the user interface 14.

The second driving mode may enable a higher degree of automated driving of the vehicle 10 than the first driving mode. The first driving mode may be such that it requires the driver of the vehicle 10 to be able to perform a driving task, either immediately or subsequent to a notice or handover period. Alternatively, or in addition, the first driving mode may be such that it requires the driver of the vehicle 10 to a least supervise an automated forward and/or sideways guidance of the vehicle 10. Alternatively, or in addition, the first driving mode may be such that it requires the vehicle 10 to provide a side mirror function. In particular, the first driving mode may correspond to one of automation levels 0 to 3 defined by the Society of Automotive Engineers.

On the other hand, the second driving mode may be such that the second driving mode does not require the driver of the vehicle 10 to perform a driving task for guiding the vehicle 10. Alternatively, or in addition, the second driving mode may be such that it does not require the vehicle 10 to provide a side mirror function. In particular, the second driving mode may correspond to one of automation levels 4 or higher defined by the Society of Automotive Engineers.

The control unit may be configured to set the orientation 26 of the field of view 23 of the camera unit 20 to capture image data for providing a side mirror function to the driver of the vehicle 10, if it is determined that the vehicle 10 is operated in the first driving mode. In particular, the control unit 11 may be configured to set the azimuth angle 24 and/or the elevation angle 25 of the orientation 26 of the field of view 23 of the camera unit 20 to respective angle values (which are typically fixed and/or time-invariant) for capturing image data regarding a rear-side environment of the vehicle 10, if it is determined that the vehicle 10 is operated in the first driving mode.

On the other hand, the control unit may be configured to adapt the orientation 26 of the field of view 23 of the camera unit 20 to capture image data for assisting an advanced driver-assistance functionality of the vehicle 10, if it is determined that the vehicle 10 is operated in the second driving mode. In particular, the control unit 11 may be configured to set the azimuth angle 24 and/or the elevation angle 25 of the orientation 26 of the field of view 23 of the camera unit 20 to respective angle values (which are typically time-variant) depending on the advanced driver-assistance functionality that is to be assisted, if it is determined that the vehicle 10 is operated in the second driving mode.

Hence, a camera unit 20 for a vehicle 10 is provided, which may be used in an efficient and flexible manner to provide a side mirror function (if required) or to improve an advanced driver-assistance functionality of the vehicle 10 (e.g. to improve automated driving of the vehicle 10).

Example advanced driver-assistance functionalities may provide at least partially automated forward and/or sideways guidance of the vehicle 10. In other words, the image data which is provided by the camera unit 20 may be used to improve the automated forward and/or sideways guidance of the vehicle 10 (if the vehicle 10 is operated in the second driving mode).

The vehicle 10 may comprise a display 13. The display 13 may be positioned within the driver cabin of the vehicle 10 and/or within a head unit of the vehicle 10. The control unit 11 may be configured to render the image data captured by the camera unit 20 on the display 13, (possibly only) if it is determined that the vehicle 10 is operated in the first driving mode. In other words, the image data for the side mirror function may be rendered on the display 13 of the vehicle 10.

The control unit 11 may be configured to determine a target orientation based on the advanced driver-assistance functionality that is to be assisted (when the vehicle 10 is operated in the second driving mode). In other words, the camera unit 20 may be oriented in accordance to a particular need of the advanced driver-assistance functionality. Furthermore, the control unit 11 may be configured to adapt the orientation 26 of the field of view 23 of the camera unit 20 in accordance to the target orientation. Furthermore, the image data of the camera unit 20 may be used for providing the advanced driver-assistance functionality, thereby improving the performance of the advanced driver-assistance functionality.

As indicated above, the vehicle 10 may comprise one or more environmental sensors 12 which are configured to capture sensor data regarding the environment of the vehicle 10. The control unit 10 may be configured to provide the advanced driver-assistance functionality of the vehicle 10 based on the sensor data of the one or more environment sensors 12 (when the vehicle 10 is operated in the second driving mode). Furthermore, the control unit 11 may be configured to determine the target orientation for the field of view 23 of the camera unit 20 based on the sensor data of the one or more environment sensors 12. By taking into account the sensor data of one or more environment sensors 12 for determining the target orientation for the field of view 23 of the camera unit 20, the performance of the advanced driver-assistance functionality may be further increased.

In particular, the control unit 11 may be configured to detect an object 30 (e.g. a sidewalk) in the environment of the vehicle 10 based on the sensor data of the one or more environment sensors 12. The object 30 may be located at one side (e.g. the firs side or the second side) of the vehicle 10. The target orientation for the field of view 23 of the camera unit 20 may then be determined in dependence of the detected object 30 (e.g. in order to provide additional image data regarding the object 30), in order to further increase the performance of the advanced driver-assistance functionality.

The control unit 11 may be configured to adapt the orientation 26 of the field of view 23 of the camera unit 20 in dependence of a sensing range 17 of at least one environmental sensor 12. Alternatively, or in addition, the control unit 11 may be configured to synchronize and/or coordinate the capturing of image data by the camera unit 20 with the capturing of sensor data by at least one environmental sensor 12. By coordinating the camera unit 20 with at least one environmental sensor 12, the performance of the advanced driver-assistance functionality may be increased further.

The vehicle 10 may comprise a first camera unit 20 at a first (e.g. the left) side of the vehicle 10 and a second camera unit 20 at a second (e.g. the right) side of the vehicle 10. The first and second sides may both spread along the x-axis or the roll axis of the vehicle. The control unit 11 may be configured to set the orientation 26 of the field of view 23 of the first camera unit 20 to capture image data for providing a side mirror function for the first side of the vehicle 10, and to set the orientation 26 of the field of view 23 of the second camera unit 20 to capture image data for providing a side mirror function for the second side of the vehicle 10, (possibly only) if it is determined that the vehicle 10 is operated in the first driving mode. The image data of both camera units 20 may be rendered on a display 13 of the vehicle 10. Hence, both side mirrors of a vehicle 10 may be replaced by respective camera units 20.

Alternatively, or in addition, the control unit 11 may be configured to adapt the orientations 26 of the respective fields of view 23 of the first and second camera units 20 independently from one another for assisting an advanced driver-assistance functionality of the vehicle 10, (possibly only) if it is determined that the vehicle 10 is operated in the second driving mode. By enabling an independent setting of the orientations 26 of the respective fields of view 23 of the first and second camera units 20, the performance of one or more advanced driver-assistance functionalities may be increased.

Furthermore, a vehicle 10, notably a road vehicle, is described, wherein the vehicle 10 is configured to be operated (possibly either) in a first driving mode or in a second driving mode, and wherein the vehicle 10 exhibits a camera unit 20 at at least one side of the vehicle 10. The camera unit 20 is configured to capture image data within a field of view 23, wherein an orientation 26 of the field of view 23 of the camera unit 20 is adaptable. Typically, the field of view 23 is limited to a defined angular range. The vehicle 10 comprises the control unit 11 which is described in the present document, for setting the orientation 26 of the field of view 23 of the camera unit 20 in dependence of the driving mode of the vehicle 10.

Fig. 3 shows a flow chart of an example method 50 for operating a camera unit 20 of a vehicle 10, which is located at at least one side of the vehicle 10, and which is configured to capture image data within a field of view 23, wherein an orientation 26 of the field of view 23 of the camera unit 20 is adaptable. The method 50 may be executed by a control unit 11 of the vehicle 10.

The method 50 comprises determining 51 whether the vehicle 10 is operated (possibly either) in a first driving mode or in a second driving mode. Furthermore, the method 50 comprises setting 52 the orientation 26 of the field of view 23 of the camera unit 20 to capture image data for providing a side mirror function to a driver of the vehicle 10, (possibly only) if it is determined that the vehicle 10 is operated in the first driving mode. In addition, the method 50 comprises adapting 53 the orientation 26 of the field of view 23 of the camera unit 20 to capture image data for assisting an advanced driver-assistance functionality of the vehicle 10, (possibly only) if it is determined that the vehicle 10 is operated in the second driving mode.

The features described herein may be relevant to one or more examples of the present document in any combination. The reference numerals in the claims have merely been introduced to facilitate reading of the claims. They are by no means meant to be limiting.

Throughout this specification various examples have been discussed. However, it should be understood that the invention is not limited to any one of these. It is therefore intended that the foregoing detailed description be regarded as illustrative rather than limiting.

## Claims

1. A system for a vehicle (10), the system comprising:
a control unit (11); and
a camera unit (20) coupled to the control unit (11) and configured to capture image data within an adaptable field of view (23);
wherein the control unit (11) is configured to
determine whether the vehicle (10) is operated in a first driving mode or in a second driving mode;
set an orientation (26) of the adaptable field of view (23) of the camera unit (20) to capture image data for providing a side mirror function to a driver of the vehicle (10), when it is determined that the vehicle (10) is operated in the first driving mode; and
adapt the orientation (26) of the adaptable field of view (23) of the camera unit (20) to capture image data for assisting an advanced driver-assistance functionality of the vehicle (10), when it is determined that the vehicle (10) is operated in the second driving mode.

2. The system according to claim 1, wherein the camera unit (20) is at at least one side of the vehicle (10).

3. The system according to claim 1 or 2, wherein
the first driving mode corresponds to one of automation levels 0 to 3 defined by the Society of Automotive Engineers; and/or
the first driving mode is such that it requires the driver of the vehicle (10) to be able to perform a driving task, either immediately or subsequent to a notice period; and/or
the first driving mode is such that it requires the driver of the vehicle (10) to a least supervise an automated forward and/or sideways guidance of the vehicle (10).

4. The system according to any of the previous claims, wherein
the second driving mode corresponds to one of automation levels 4 or higher defined by the Society of Automotive Engineers; and/or
the second driving mode does not require the driver of the vehicle (10) to perform a driving task for guiding the vehicle (10).

5. The system according to any of the previous claims, wherein
the vehicle (10) comprises a display (13); and
the control unit (11) is configured to render the image data captured by the camera unit (20) on the display (13), when it is determined that the vehicle (10) is operated in the first driving mode.

6. The system according to any of the previous claims, wherein the control unit (11) is configured to
determine a target orientation based on the advanced driver-assistance functionality that is to be assisted;
adapt the orientation (26) of the adaptable field of view (23) of the camera unit (20) in accordance to the target orientation; and
use the image data of the camera unit (20) for providing the advanced driver-assistance functionality.

7. The system according to any of the previous claims, wherein
the vehicle (10) comprises one or more environmental sensors (12) configured to capture sensor data regarding an environment of the vehicle (10); and
the control unit (11) is configured to
provide the advanced driver-assistance functionality of the vehicle (10) based on the sensor data of the one or more environment sensors (12);
determine a target orientation based on the sensor data of the one or more environment sensors (12); and
adapt the orientation (26) of the adaptable field of view (23) of the camera unit (20) in accordance to the target orientation.

8. The system according to claim 7, wherein the control unit (11) is configured to
detect an object (30) in the environment of the vehicle (10) based on the sensor data of the one or more environment sensors (12); and
determine the target orientation in dependence of the detected object (30).

9. The system according to any of claims 7 to 8, wherein the control unit (11) is configured to
adapt the orientation (26) of the adaptable field of view (23) of the camera unit (20) in dependence of a sensing range (17) of at least one environmental sensor (12); and/or
synchronize and/or coordinate capturing of image data by the camera unit (20) with capturing of sensor data by at least one environmental sensor (12).

10. The system according to any of the previous claims, wherein
the camera unit (20) is configured to adapt an azimuth angle (24) and/or an elevation angle (25) of the orientation (26) of the adaptable field of view (23) of the camera unit (20);
the control unit (11) is configured to set the azimuth angle (24) and/or the elevation angle (25) of the orientation (26) of the adaptable field of view (23) of the camera unit (20) to respective angle values for capturing image data regarding a rear-side environment of the vehicle (10), if it is determined that the vehicle (10) is operated in the first driving mode; and
the control unit (11) is configured to set the azimuth angle (24) and/or the elevation angle (25) of the orientation (26) of the adaptable field of view (23) of the camera unit (20) to respective angle values depending on the advanced driver-assistance functionality that is to be assisted, if it is determined that the vehicle (10) is operated in the second driving mode.

11. The system according to any of the previous claims, wherein
the vehicle (10) comprises a user interface (14) enabling the driver to select the first driving mode or the second driving mode; and
the control unit (11) is configured to determine the driving mode based on a setting of the user interface (14).

12. The system according to any of the previous claims, wherein
the vehicle (10) comprises a first camera unit (20) at a first side of the vehicle (10) and a second camera unit (20) at a second side of the vehicle (10);
the control unit (11) is configured to set the orientation (26) of the adaptable field of view (23) of the first camera unit (20) to capture image data for providing a side mirror function for the first side of the vehicle (10), and to set the orientation (26) of the adaptable field of view (23) of the second camera unit (20) to capture image data for providing a side mirror function for the second side of the vehicle (10), if it is determined that the vehicle (10) is operated in the first driving mode; and
the control unit (11) is configured to adapt the orientations (26) of the respective fields of view (23) of the first and second camera units (20) independently from one another for assisting an advanced driver-assistance functionality of the vehicle (10), if it is determined that the vehicle (10) is operated in the second driving mode.

13. The system according to any of the previous claims, wherein
the camera unit (20) comprises a camera (21) which is configured to capture the image data, and a motion unit (22) which is configured to change an orientation of the camera (21) for changing the orientation (26) of the adaptable field of view (23) of the camera unit (20); and
the control unit (11) is configured to control the motion unit (22) for setting and/or adapting the orientation (26) of the adaptable field of view (23) of the camera unit (20).

14. The system according to any of the previous claims, wherein
the adaptable field of view (23) of the camera unit (20) is limited to an angular range for an azimuth angle (24) and/or for an elevation angle (25), which lies between 30° and 90°; and/or
the control unit (11) is configured to adapt the orientation (26) of the adaptable field of view (23) such that image data for an angular range of 90° or more, 140° or more, or 160° or more for the azimuth angle (24) and/or for the elevation angle (25) can be captured using the camera unit (20).

15. Vehicle (10), wherein
the vehicle (10) is configured to be operated in a first driving mode or a second driving mode; and
the vehicle (10) comprises a system according any of the previous claims.
